# EUROPEAN PATENT APPLICATION

(11) **EP 2 639 115 A1**
(43) Date of publication of application: **18.09.2013**
(21) Application number: 11839120.0
(22) Date of filing: 31.10.2011
(51) Int. Cl.: B60R 21/213, B60R 21/232

(54) **AIRBAG DEVICE**

(30) Priority: 11.11.2010 JP 2010253243
(71) Applicant: Ashimori Industry Co., Ltd., Osaka-shi Osaka 550-0014 (JP)
(72) Inventor: KONISHI, Shuhei, Settsu-shi Osaka 566-0001 (JP); MINAMI, Yuta, Settsu-shi Osaka 566-0001 (JP); MATSUOKA, Miwa, Settsu-shi Osaka 566-0001 (JP)
(74) Representative: Appelt, Christian W.
(86) International application number: PCT/JP2011/075062
(87) International publication number: WO 2012/063670

(57) **Abstract**

An airbag is mounted to a vehicle with a predetermined torque, using mounting brackets.

An airbag device to be disposed along a vehicle-body side surface includes a plurality of mounting tabs (11) provided at an upper edge of an airbag and mounting brackets (40(1)). The mounting brackets (40(1)) each include inner and outer plates (41) and (42) that are joined at a connecting portion (43). The inner plate (41) has an annular member (44). In a state in which insertion holes in the mounting tabs are externally fitted to the annular members (44), the mounting tabs are nipped between the inner and outer plates (41) and (42). In this state, bolts are inserted through inner holes (47) in the annular members (44) and insertion holes in the outer plates (42) and in a vehicle-body side wall and are screwed into nuts attached to the vehicle-body side wall.

## Description

### Technical Field

The present invention relates to airbag devices to be mounted to vehicle-body side walls and to be inflated and deployed in vehicles, and more specifically, it relates to an airbag device that has mounting brackets for mounting an airbag to a vehicle-body side wall.

### Background Art

Airbag devices that are inflated and deployed downward along vehicle-body side walls, like curtains (curtain airbag devices), to protect the heads of occupants in front seats and rear seats in an emergency stop of a vehicle, such as collision, have become common. Because such an airbag device is laterally longer than conventional airbag devices stored in, for example, steering wheels and instrument panels, the airbag is provided with a plurality of mounting tabs protruding from the airbag at an upper part thereof, corresponding to the lateral length thereof, via which the airbag is mounted to a vehicle-body side wall (for example, a roof-side rail).

Because these mounting tabs are subjected to a considerable tensile force when the airbag is inflated and deployed, one end of each mounting tab needs to be securely fixed to a vehicle-body side wall (for example, a roof-side rail) with a bolt etc., so that the mounting tabs of the airbag are not detached from mounting means (mounting brackets) when the airbag is inflated and deployed. Airbag devices having mounting structures for this purpose have already been proposed.

For example, there is known an airbag device in which a mounting tab provided so as to protrude from an airbag is sandwiched between two metal plates, and the airbag is mounted to a vehicle-body side wall in this state (PTL 1).
In this airbag device, the airbag is fixed by crimping the two metal plates together to integrate the metal plates and the mounting portion (the mounting tab), inserting a bolt into mounting holes provided in the mounting portion and the metal plate, and screwing the bolt into a fixing hole provided in an inner panel (a vehicle-body side wall) and a nut welded to the inner panel.

Furthermore, separately from the above airbag device, there is known an airbag device in which an edge (a mounting tab) of an airbag body is sandwiched between a bent metal plate, and this metal plate is mounted to a roof-side frame (a vehicle-body side wall) of a vehicle with a bolt (PTL 2).

However, because the airbag device disclosed in PTL 1 has a structure in which the mounting portion (the mounting tab) of the airbag is sandwiched between the pair of metal plates, and in this state, the bolt is inserted through the metal plates, the mounting portion, and the inner panel and screwed into the nut, thereby integrally fastening these components, the mounting portion sandwiched between the pair of metal plates serves as a cushion when the bolt is fastened, making it difficult to obtain a feeling of contact when the bolt is fastened. Hence, it is difficult to fasten the bolt with a predetermined torque. In addition, when a state in which the mounting portion is compressed between the pair of metal plates lasts for a long time, the torque of the bolt may decrease due to thermal expansion and deterioration of the mounting portion (the mounting tab).
Also in the airbag device disclosed in PTL 2, because a bent back claw is pushed toward the plate by the vehicle-body side wall and compresses the edge (the mounting tab), the edge serves as a cushion, making it difficult to obtain a feeling of contact of the bolt. Furthermore, similarly to the airbag device disclosed in PTL 1, a decrease in torque due to aging may occur.

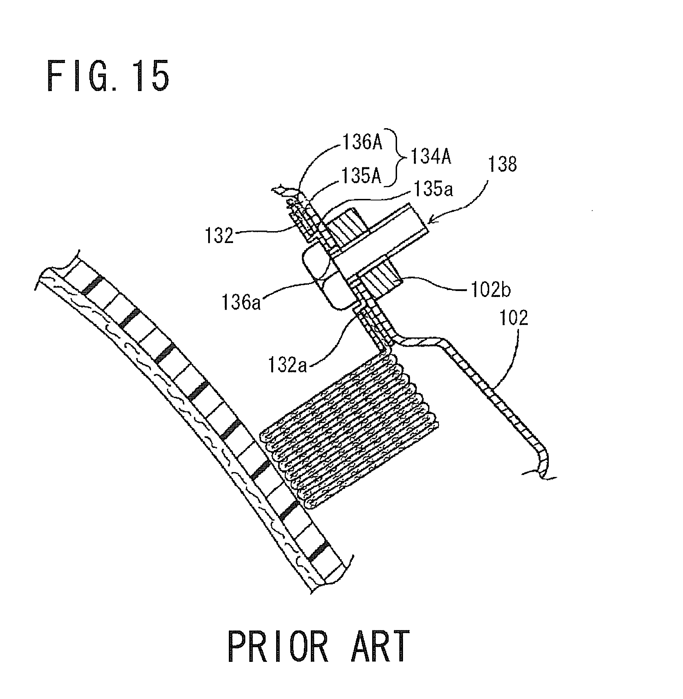

Meanwhile, to overcome these problems, there has been proposed an airbag device having a mounting bracket that is configured to sandwich a mounting tab portion (a mounting tab) of an airbag between outer and inner plate portions but that prevents the mounting tab portion from serving as a cushion, thereby making it possible to obtain a feeling of contact when a bolt is fastened (PTL 3).
In this airbag, as shown in FIG. 15, a mounting bracket 134A is composed of inner and outer plate portions 136A and 135A, a peripheral edge portion of a mounting hole 136a in the inner plate portion 136A is provided so as to be substantially in flush with a vehicle-exterior-side surface of the outer plate portion 135A, and a mounting bolt 138, which is allowed to penetrate through an insertion hole 132a in a mounting tab portion 132 and a mounting hole 135a in the outer plate portion 135A and protrudes toward a vehicle exterior side, is screwed into a nut 102b attached to an inner panel 102.

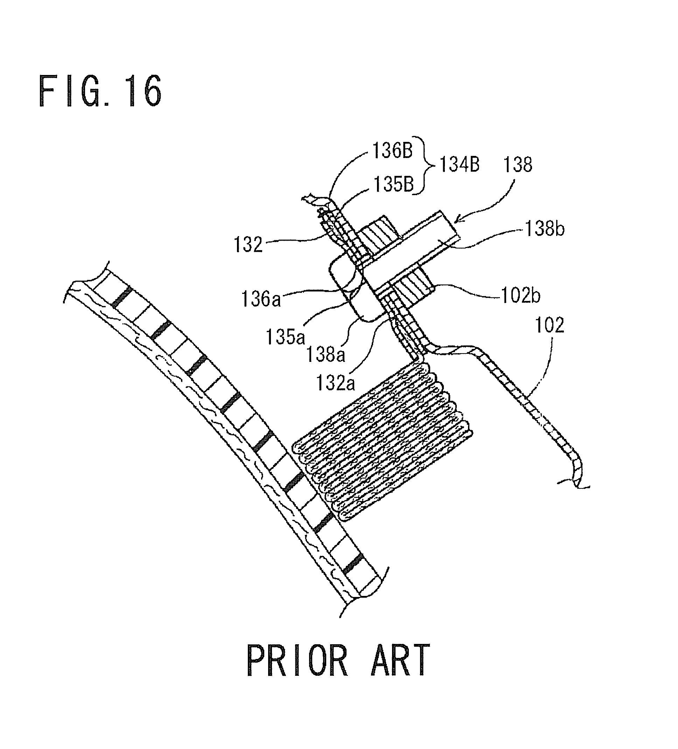

Furthermore, in a mounting bracket 134B shown in FIG. 16, the inside diameter of a mounting hole 136a in an inner plate portion 136B is set substantially the same as the inside diameter of a mounting hole 135a in an outer plate portion 135B. A head 138a of a mounting bolt 138 is abutted against the periphery of the mounting hole 136a in the inner plate portion 136B, and a fastening shaft 138b of the mounting bolt 138 is fastened to a nut 102b on an inner panel (a vehicle-body side wall) 102, thereby directly joining the inner and outer plate portions 136B and 135B.

With the mounting brackets 134A and 134B of the airbag device in PTL 3, it seems that the mounting tab portion 132 does not serve as a cushion, a feeling of contact is obtained when the mounting bolt 138 is fastened, and a decrease in torque after fastening does not occur.
However, with this airbag device, when the mounting tab portion 132 of the airbag is fixed to the inner panel 102, the inner plate portion 136A or 136B and the outer plate portion 135A or 135B have to be separately fitted and positioned with respect to the mounting tab portion 132 from the front and back. Furthermore, to integrate the mounting tab portion 132 and the outer plate portions 135A and 135B and the inner plate portions 136A and 136B in advance, portions to be deformed are provided in the outer plate portions 135A and 135B and the inner plate portions 136A and 136B, and the portions to be deformed are crimped. Therefore, not only the number of components handled increases, but also mounting of the airbag to the inner panel inevitably becomes complex.

Under the circumstances, there is a demand for an airbag device having mounting means that is composed of a small number of components, does not require positioning, and consequently, eases mounting of an airbag to a vehicle body, and furthermore, as in the conventional airbag device, can obtain a feeling of contact when mounting tabs of the airbag are fastened with bolts, and does not cause a decrease in torque.

### Citation List

### Patent Literature

PTL 1: Japanese Unexamined Patent Application, Publication No. 2000-247203
PTL 2: Japanese Unexamined Patent Application, Publication No. 2000-142302
PTL 3: Japanese Unexamined Patent Application, Publication No. 2006-117110

### Summary of Invention

### Technical Problem

The present invention has been made to overcome the above-described problems, and objects thereof are, in an airbag device to be mounted to a vehicle-body side wall, to enable a feeling of contact to be obtained when bolts are fastened, to prevent degradation of a mounting condition due to deterioration of mounting tabs etc., to simplify the configuration of mounting brackets for mounting an airbag to the vehicle-body side wall, and to ease mounting of the airbag to the vehicle-body side wall by eliminating the need of any special positioning.

### Solution to Problem

(1) The present invention is an airbag device to be disposed at an upper part inside a vehicle, along a front-rear direction of the vehicle, the airbag device including a plurality of mounting tabs that are provided on an airbag of the airbag device, each mounting tab having an insertion hole; a mounting bracket including inner and outer plates that are connected by a flexible connecting portion, each inner and outer plate having an insertion hole; an annular member that has a predetermined thickness and is to be disposed inside the insertion hole in the mounting tab; and a fastening means having a shaft portion penetrating through the inner hole in the annular member and the insertion hole in the inner and outer plates, the fastening means serving to attach the mounting bracket to a vehicle-body side wall. The annular member restricts the distance between the inner and outer plates to the predetermined thickness when the airbag is mounted to the vehicle-body side wall.
(2) The present invention is an airbag device to be disposed at an upper part inside a vehicle, along a front-rear direction of the vehicle, the airbag device including a plurality of mounting tabs that are provided on an airbag of the airbag device, each mounting tab having an insertion hole; a mounting bracket including inner and outer plates that are connected by a flexible connecting portion, each inner and outer plate having an insertion hole; an annular member that has predetermined thickness and is to be disposed inside the insertion hole in the mounting tab and the insertion hole in the outer plate; and a fastening means having a shaft portion penetrating through the inner hole in the annular member and the insertion hole in the inner and outer plates, the fastening means serving to attach the mounting bracket to a vehicle-body side wall. The annular member restricts the distance between the inner plate and the vehicle-body side wall to the predetermined thickness when the airbag is mounted to the vehicle-body side wall.
(3) The present invention is an airbag device to be disposed at an upper part inside a vehicle, along a front-rear direction of the vehicle, the airbag device including a plurality of mounting tabs that are provided on an airbag of the airbag device, each mounting tab having an insertion hole; a mounting bracket including a single plate having an insertion hole, the mounting bracket being disposed on a vehicle interior side of the mounting tab; an annular member that has a predetermined thickness and is to be disposed inside the insertion hole in the mounting tab; and a fastening means having a shaft portion penetrating through the inner hole in the annular member and the insertion hole in the mounting bracket, the fastening means serving to attach the mounting bracket to a vehicle-body side wall. The annular member restricts the distance between the mounting bracket and the vehicle-body side wall to the predetermined thickness when the airbag is mounted to the vehicle-body side wall.
(4) The present invention is the airbag device according to any one of (1) to (3) above, in which both or either of the inner hole and the insertion hole, through which the shaft portion of the fastening means passes, are formed in the shape of an elongated hole.
(5) The present invention is the airbag device according to any one of (1) to (4) above, in which the annular member is formed integrally with the mounting bracket.
(6) The present invention is the airbag device according to any one of (1) to (4) above, in which the annular member is formed separately from the mounting bracket.
(7) The present invention is the airbag device according to any one of (1) to (6) above, in which the mounting bracket includes integrally formed a retaining member that retains the mounting tab.
(8) The present invention is the airbag device according to any one of (1) to (7) above, in which the mounting bracket includes integrally formed engaging members to be engaged with mounting holes provided in the vehicle-body side wall.
(9) The present invention is the airbag device according to any one of (1) to (8) above, in which the annular member is a circular member.
(10) The present invention is the airbag device according to any one of (1) to (9) above, in which the fastening means is a bolt and a nut, the bolt being provided with a toothed washer for temporary attachment, the toothed washer temporarily attaching the bolt to the mounting bracket to which the mounting tab are fitted.

### Advantageous Effects of Invention

According to the present invention, when the airbag body is mounted using the fastening means, a cushioning effect of the mounting tab is not exerted, as in the case of the airbag device described in PTL 3. Thus, stable mounting is possible, and degradation of a mounting condition (a decrease in torque) due to deterioration of the mounting tab etc., can be prevented. In addition, compared with the mounting bracket disclosed in PTL 3, which is composed of the inner and outer plate portions, because the mounting bracket is formed as a single component, there is no need to align the inner hole in the annular member and the insertion hole in the mounting bracket, and the number of components can be reduced.
Because the mounting bracket is attached in advance to the mounting tab, mounting work and conveyance when mounting the airbag are easy.

### Brief Description of Drawings

[FIG. 1] FIG. 1 is a cross-sectional view showing a vehicle interior, in which the position where an airbag is to be mounted is illustrated.
[FIG. 2] FIG. 2 is a side view of a stored airbag device.
[FIG. 3] FIG. 3 is a schematic front view of a deployed airbag of the airbag device.
[FIG. 4] FIG. 4A is a perspective view of a mounting bracket according to a first embodiment, as viewed from a vehicle exterior side, and FIG. 4B is a perspective view of the same embodiment, as viewed from a vehicle interior side.
[FIG. 5] FIG. 5A is a perspective view showing the relationship between the mounting bracket and a mounting tab before being mounted, FIG. 5B is a side view thereof, FIG. 5C is a perspective view showing a state in which the mounting tab is disposed between half-folded inner and outer plates of the mounting bracket, FIG. 5D is a side view thereof, FIG. 5E is a perspective view showing a state in which the mounting tab is nipped between the inner and outer plates of the mounting bracket, and FIG. 5F is a side view thereof.
[FIG. 6] FIG. 6 includes figures showing the airbag and the mounting bracket mounted to a vehicle-body side wall, in which FIG. 6A is a front view thereof, FIG. 6B is a cross-sectional view taken along line A-A in FIG. 6A, FIG. 6C is a cross-sectional view taken along line B-B in FIG. 6A, and FIG. 6D is a cross-sectional view taken along line C-C in FIG. 6A.
[FIGS. 7A and 7B] FIG. 7A is a perspective view of a mounting bracket according to a second embodiment, as viewed from the vehicle exterior side, and FIG. 7B is a perspective view of the same embodiment, as viewed from the vehicle interior side.
[FIGS. 7C and 7D] FIG. 7C is a front view of the mounting bracket attached to the vehicle-body side wall, and FIG. 7D is a cross-sectional view taken along line A-A in FIG. 7C.
[FIGS. 8A and 8B] FIG. 8A is a perspective view of a mounting bracket according to a third embodiment, as viewed from the vehicle exterior side, and FIG. 8B is a perspective view of the same embodiment, as viewed from the vehicle interior side.
[FIG. 8CD] FIG. 8C is a front view of the mounting bracket attached to the vehicle-body side wall, and FIG. 8D is a cross-sectional view taken along line A-A in FIG. 8C.
[FIG. 9] FIG. 9 includes perspective views of a mounting bracket according to a fourth embodiment, as viewed from the vehicle exterior side, in which FIG. 9A shows a state before claw portions are bent back, and FIG. 9B shows a state after the claw portions are bent back.
[FIG. 10] FIG. 10A is a front view of the mounting bracket according to the fourth embodiment, as viewed from the vehicle exterior side, FIG. 10B is a side view thereof, FIG. 10C is a front view, as viewed from the vehicle exterior side, showing a state in which the claw portions of a retaining member are bent back so as to be substantially parallel to a metal plate, FIG. 10D is a side view thereof, and FIG. 10E is a side cross-sectional view thereof, showing a state in which the mounting tab is attached thereto.
[FIGS. 11A and 11B] FIG. 11A is a perspective view of a mounting bracket according to a fifth embodiment, as viewed from the vehicle exterior side, and FIG. 11B is a perspective view of the same embodiment, as viewed from the vehicle interior side.
[FIGS. 11C, 11D, and 11E] FIG. 11C is a front view of a mounting bracket according to the fifth embodiment, mounted to a vehicle-body side wall, FIG. 11D is a cross-sectional view taken along line A-A in FIG. 11C, and FIG. 11E is a cross-sectional view taken along line B-B in FIG. 11C.
[FIG. 12] FIG. 12 shows a sixth embodiment, in which FIG. 12A is a front view of a mounting bracket attached to the vehicle-body side wall, and FIG. 12B is a cross-sectional view taken along line A-A in FIG. 12A.
[FIG. 13] FIG. 13 shows a seventh embodiment, in which FIG. 13A is a front view of a mounting bracket attached to the vehicle-body side wall, and FIG. 13B is a cross-sectional view taken along line A-A in FIG. 13A.
[FIG. 14] FIG. 14 shows a mounting bracket according to an eighth embodiment, in which FIG. 14A is a front view thereof, and FIG. 14B is a cross-sectional view thereof taken along line A-A in FIG. 14A. FIG. 14B shows a state in which a bolt is temporarily attached to the mounting bracket, and
FIG. 14C shows a state in which the bolt is fastened to a nut (not shown) attached to a vehicle-exterior-side surface of a vehicle-body side wall.
[FIG. 15] FIG. 15 is a cross-sectional view showing a mounting structure of a conventional airbag.
[FIG. 16] FIG. 16 is a cross-sectional view showing another mounting structure of the conventional airbag.

### Description of Embodiments

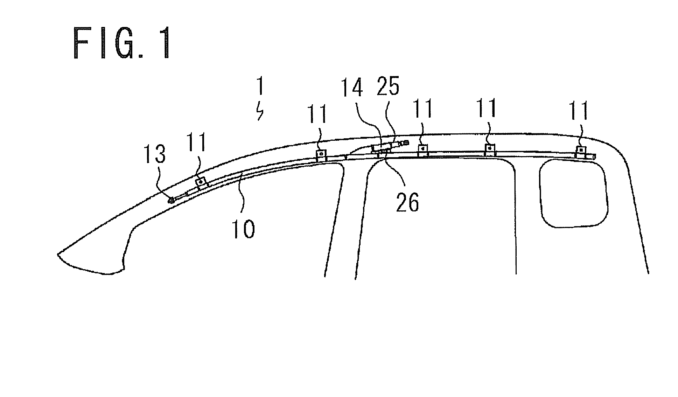

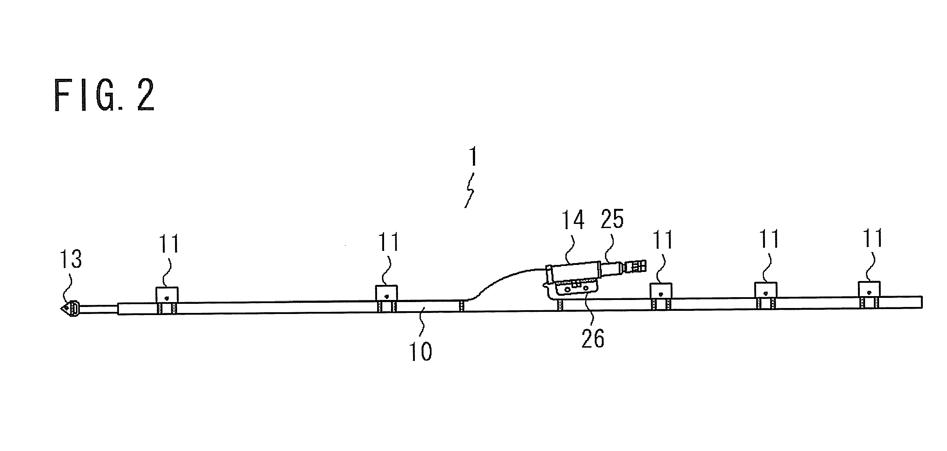

An airbag device (a curtain airbag device) that is an embodiment of the airbag device of the present invention and is disposed at an upper part inside a vehicle along a front-rear direction of the vehicle will be described with reference to the attached drawings. FIG. 1 is a cross-sectional view showing a vehicle interior, in which the position where an airbag 10 is to be mounted is illustrated. FIG. 2 is a side view showing an airbag device 1 in a non-operating state, i.e., in a stored state.
This airbag device 1 is configured such that the airbag 10 is inflated by gas supplied from an inflator, due to an impact, such as a collision of the vehicle, and is deployed from a vehicle-body side wall downward, along the front-rear direction of the vehicle, like a curtain, thereby protecting mainly the head of a passenger.
In this airbag device, a plurality of mounting tabs 11 are provided along an upper edge of the airbag (or an airbag body) 10. As shown in FIG. 1, these mounting tabs 11 are attached to the vehicle-body side wall, e.g., a roof-side rail portion (not shown), via mounting brackets (described below), at an upper part of the vehicle body, along the front-rear direction of the vehicle body. In a non-operating state, the airbag 10 is folded in such a manner as to be capable of being inflated and deployed to the lower side of the vehicle and is stored in a storage portion, such as the inside of a trim part.

The airbag 10 in a stored state is formed in a laterally elongated bag shape corresponding to the shape of a window to be covered, in the vehicle-body side wall. The airbag device 1 has a gas inlet portion 14 substantially in the middle position thereof in the longitudinal direction.
The gas inlet portion 14 is formed in a tube shape and is open at the rear end with respect to the vehicle, by making a portion of base fabric protrude upward from an upper edge of the airbag 10 and joining it to an outer-peripheral joining portion of the airbag 10 in a continuous manner, along the edge thereof. In the airbag device 1, one end (a gas jet nozzle) of a tubular cylinder-type inflator 25 is inserted into the gas inlet portion 14 placed, for example, in a gas guide member, a gas rectification member, or the like, and then, they are all fixed to the vehicle-body side wall (the roof-side rail portion) using a bracket 26.

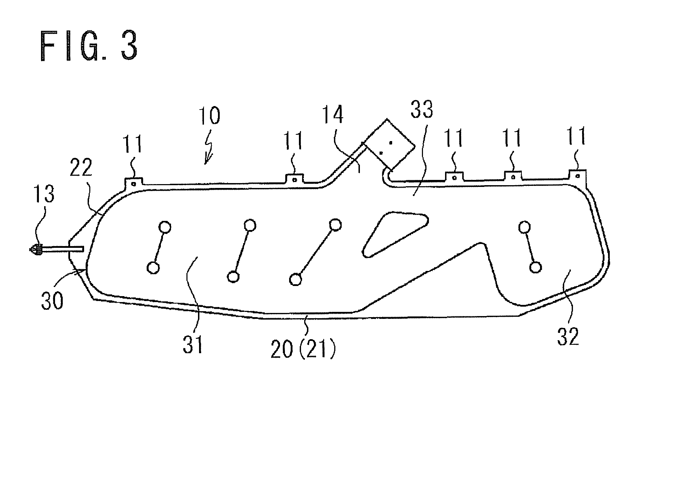

FIG. 3 is a schematic front view of the deployed airbag 10 of the airbag device 1 according to this embodiment.
More specifically, the airbag 10 is inflated and deployed between an occupant and the vehicle-body side wall etc., in the state shown in the figure, along the vehicle-body side wall including a side window in the vehicle so as to cover the entirety thereof.
Note that the airbag 10 has a substantially triangular projecting tab protruding toward the front of the vehicle, and a front mounting rod 13 to be fixed to a front pillar portion of the vehicle is provided at the front edge thereof.

The airbag 10 is formed by, for example, stacking a front base fabric piece 20 on the occupant side (on the vehicle interior side) and a back base fabric piece 21 on the vehicle exterior side, the base fabric pieces having the same shape, and joining the base fabric pieces 20 and 21, facing each other, along an outer-peripheral joining portion 22. The airbag 10 includes an inflating portion 30 (a front inflating portion 31 and a rear inflating portion 32) and a connecting portion 33 that extends along the upper edge of the airbag 10 and connects the inflating portions 31 and 32.

In this embodiment, the gas inlet portion 14 is provided above the front inflating portion 31 of the airbag 10 so as to communicate with the front inflating portion 31. The gas generated by the inflator 25 is introduced into the airbag 10 through this gas inlet portion 14 and is further guided to the inflating portion 30 (the front inflating portion 31 and the rear inflating portion 32).

Next, the mounting brackets for mounting the airbag 10 to the vehicle body will be described.

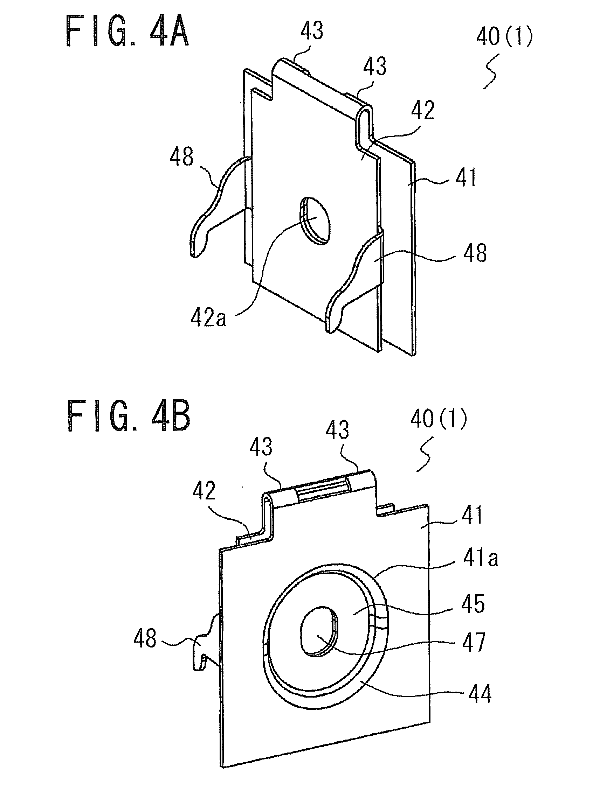

FIG. 4A is a perspective view of a mounting bracket according to a first embodiment, as viewed from the vehicle exterior side, and FIG. 4B is a perspective view of the same embodiment, as viewed from the vehicle interior side.
In FIG. 4A, a mounting bracket 40(1) is composed of a vehicle-interior-side plate (a plate portion: hereinbelow simply, an "inner plate") 41 and a vehicle-exterior-side plate (hereinbelow simply, an "outer plate") 42, which are substantially rectangular and made of metal, and a connecting portion (which may be two narrow strips) 43 that connects the inner and outer plates 41 and 42 and is narrower than the inner and outer plates 41 and 42.
In this embodiment, the lateral width of the inner plate 41 is larger than that of the outer plate 42. This is because the inner plate 41, whose purpose is to press the mounting tab 11, is restricted by the size of the mounting tab 11, whereas the outer plate 42 is restricted only by the provision of engaging members 48. Thus, the width of the outer plate 42 may be smaller than that of the inner plate 41.

The inner plate 41 is provided with, at the center thereof, an annular member 44 that has a bottom portion 45 protruding from a vehicle-interior-side surface of the inner plate 41 toward the outer plate 42. The bottom portion 45 of the annular member 44 has, at the center thereof, an inner hole 47 that is elongated in the top-bottom direction and through which a bolt (described below) passes.
The reason why the annular member 44 is provided with the bottom portion 45 is to enable the head of the bolt to abut against the bottom portion 45 when the bolt is inserted and fastened. Thus, the annular member 44 having the bottom portion 45 has such a size as to be able to accommodate the head of the bolt.

A pair of hook-shaped engaging members 48 that protrude toward the vehicle exterior side and are to be engaged with mounting holes in the vehicle-body side wall are provided at both sides of the outer plate 42, at positions substantially in the middle thereof in the top-bottom direction.
By engaging these engaging members 48 with the mounting holes in the vehicle-body side wall (described below), it is possible to prevent the mounting bracket 40(1) from rotating relative to the vehicle body, leading to an arbitrary movement of the airbag 10 when the airbag 10 is inflated and deployed.
Note that, because a larger distance between the pair of engaging members 48 is more advantageous, the engaging members 48 are provided at both ends of the mounting bracket 40(1) in this embodiment.

The annular member 44 is set such that, when the mounting bracket 40(1) formed of a single plate is folded in two at the connecting portion 43 such that the inner and outer plates 41 and 42 are substantially parallel to each other, a back surface of the bottom portion 45 abuts against a vehicle-interior-side surface of the outer plate 42, i.e., such that the thickness of the annular member 44 defines the distance between the inner and outer plates 41 and 42.
Therefore, the annular member 44 functions as a spacer member that restricts the distance between the inner and outer plates 41 and 42 to a predetermined thickness when the airbag is mounted to the vehicle-body side wall. The annular member 44 does not necessarily have to be circular but may be of another shape, e.g., rectangular or hexagonal, as long as the head of the bolt can rotate within the annular member 44.

The inner plate 41 has an insertion hole 41a (see FIG. 4B), which is an opening communicating with the annular member 44. The outer plate 42 also has an insertion hole 42a, through which a bolt (described below) will pass, substantially at the center thereof, corresponding to the inner hole 47 that is provided in the bottom portion 45 of the annular member 44 and is elongated in the top-bottom direction. This insertion hole 42a is formed in the shape of a hole elongated in the top-bottom direction, similarly to the inner hole 47, to ease positioning when inserting the bolt. By forming the inner hole 47 in the annular member 44 and the insertion hole 42a in the outer plate 42 of the mounting bracket 40(1) in an elongated hole shape like this, it is possible to easily absorb a mounting error occurring when the mounting bracket 40(1) is attached to the vehicle-body side wall.

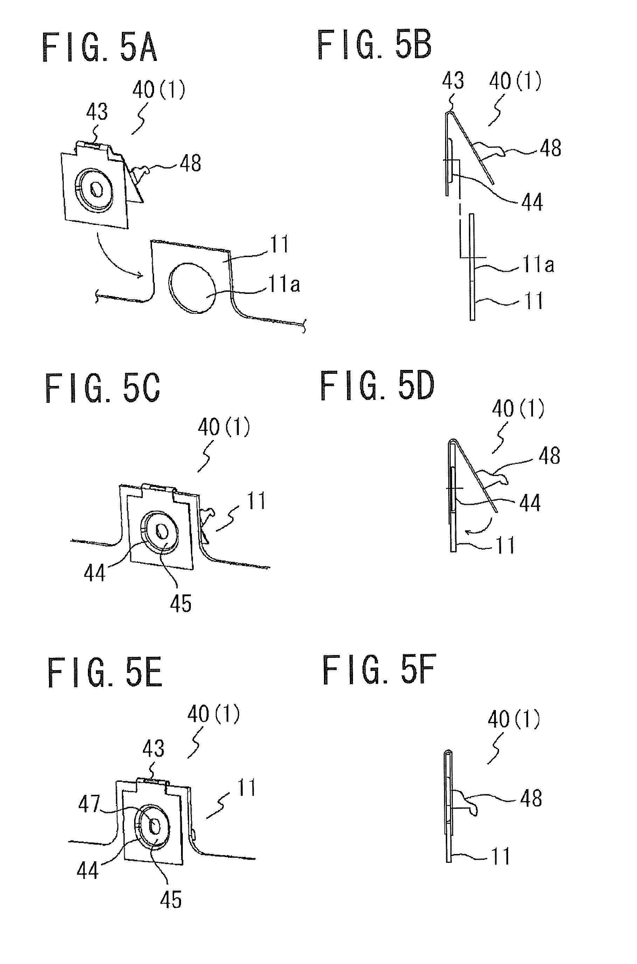

FIG. 5 shows a series of assembling steps of the above-described mounting bracket 40(1) and the airbag 10.
More specifically, FIG. 5A is a perspective view showing the relationship between the mounting bracket 40(1) and the mounting tab 11 of the airbag 10 before being mounted, and FIG. 5B is a side view thereof, in which the mounting bracket 40(1) is half-folded at the connecting portion 43, and the mounting tab 11 is not yet disposed between the inner and outer plates 41 and 42.

FIG. 5C is a perspective view showing a state in which the mounting tab 11 is disposed between the half-folded inner and outer plates 41 and 42 of the mounting bracket 40(1), and FIG. 5D is a side view thereof.
In this state, the mounting tab 11 is disposed between the inner and outer plates 41 and 42 in a state in which the insertion hole 11a therein is externally fitted to the annular member 44 of the inner plate 41.

FIG. 5E is a perspective view showing a state in which the mounting tab 11 is nipped between the inner and outer plates 41 and 42 of the mounting bracket 40(1), and FIG. 5F is a side view thereof.
In the state shown, the mounting tab 11 is nipped between the inner and outer plates 41 and 42 that are bent at the connecting portion 43 until they are substantially parallel to each other and is temporarily attached, and the inner hole 47 in the bottom portion 45 of the annular member 44 and the insertion hole 42a in the outer plate 42 (see FIG. 4A) are aligned. That is, the positions of these holes have been preliminarily determined such that they are aligned just by folding the inner and outer plates 41 and 42 of the mounting bracket 40(1) in two at the connecting portion 43 without requiring any special positioning work.

Next, the process of mounting the airbag 10, which is temporarily attached to and integrated with the mounting bracket 40(1) as above, to the vehicle-body side wall will be described.

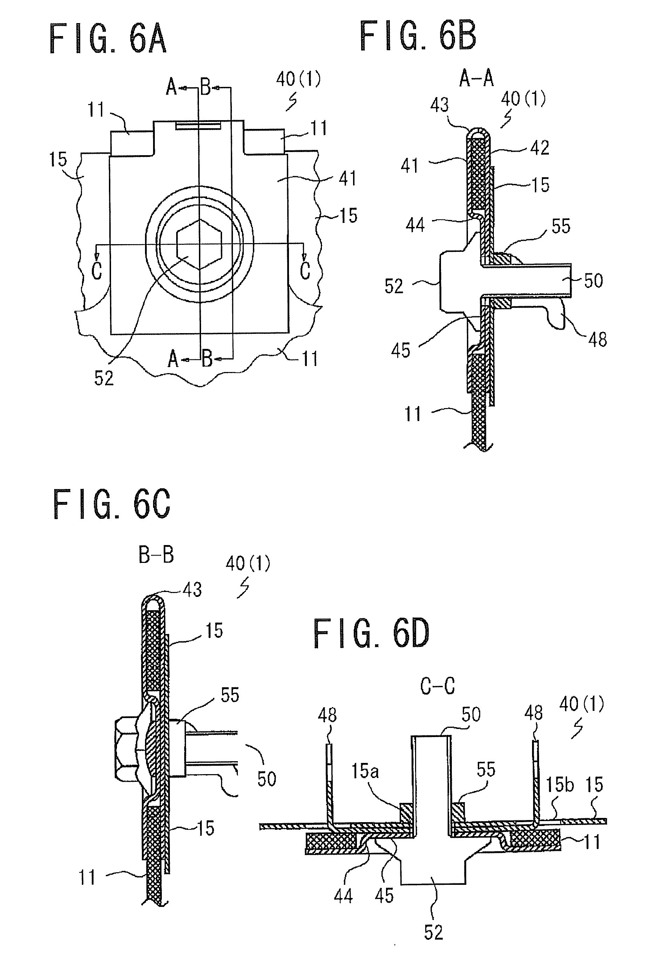

FIG. 6 includes figures showing the airbag 10 and mounting bracket 40(1) mounted to a vehicle-body side wall 15, in which FIG. 6A is a front view thereof, FIG. 6B is a cross-sectional view taken along line A-A in FIG. 6A, FIG. 6C is a cross-sectional view taken along line B-B in FIG. 6A, and FIG. 6D is a cross-sectional view taken along line C-C in FIG. 6A.
After the airbag 10 and the mounting bracket 40(1) are integrated, the engaging members 48 on the outer plate 42 are inserted into mounting holes 15b (for example, see FIG. 6D) provided in the vehicle-body side wall 15, the outer plate 42 is abutted against the vehicle-body side wall 15, and the engaging members 48 are engaged with the mounting holes. As a result, the inner hole 47 in the bottom portion 45 of the annular member 44, the insertion hole 42a in the outer plate 42, the insertion hole 15a in the vehicle-body side wall 15, and a nut 55 attached to a vehicle-exterior-side surface of the vehicle-body side wall 15 are all aligned. Then, a bolt 50 is inserted through the inner hole 47 in the annular member 44 and the insertion holes 42a and 15a, screwed into the nut 55, and fastened until a bolt head 52 of the bolt 50 abuts against the bottom portion 45 of the annular member 44. Thus, the airbag 10 can be mounted to the vehicle-body side wall 15.

According to this embodiment, although the mounting tab 11 of the airbag 10 is nipped between the inner and outer plates 41 and 42 when the airbag 10 is mounted, a vehicle-exterior-side surface of the bottom portion 45 of the annular member 44 is designed to have such a thickness as to be able to directly abut against the vehicle-interior-side surface of the outer plate 42, regardless of the thickness of the mounting tab 11, when the bolt 50 is screwed into the nut 55 and fastened thereto. Thus, a feeling of contact due to fastening can be obtained, and the fastening torque can be adjusted. Furthermore, the influence of the mounting tab 11 does not exist after the bolt 50 is fastened. Thus, there is no risk of a decrease in the adjusted torque.

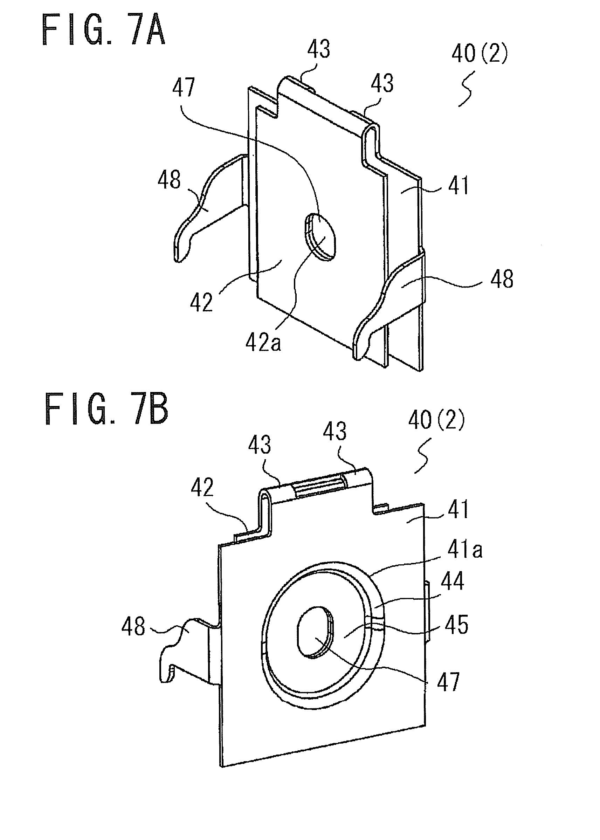

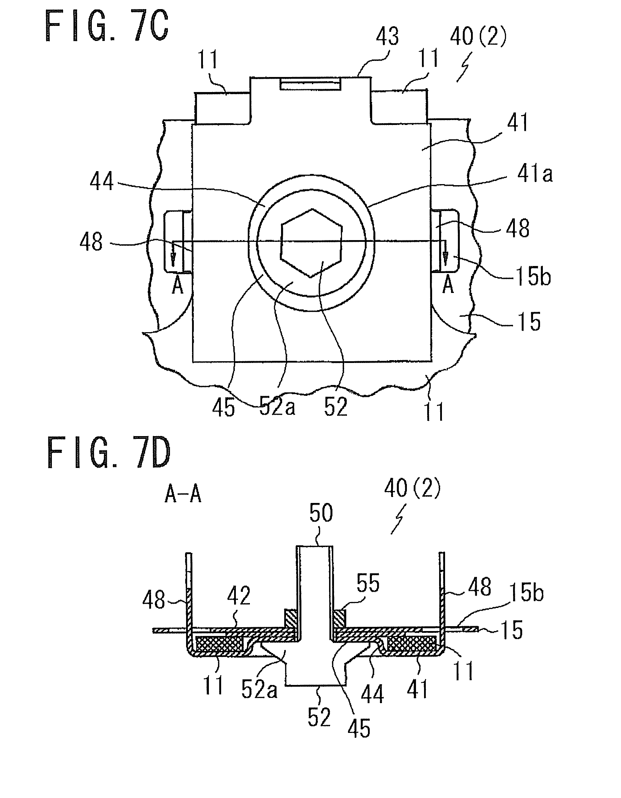

FIG. 7A is a perspective view of a mounting bracket 40(2) according to a second embodiment, as viewed from the vehicle exterior side, and FIG. 7B is a perspective view of the same embodiment, as viewed from the vehicle interior side. Furthermore, FIG. 7C is a front view of the mounting bracket 40(2) mounted to a vehicle-body side wall, and FIG. 7D is a cross-sectional view taken along line A-A in FIG. 7C.
The mounting bracket 40(2) according to the second embodiment and the mounting bracket 40(1) according to the first embodiment, shown in FIGS. 4A and 4B, differ in that whereas, in the mounting bracket 40(1), the engaging members 48 are provided at both side edges of the outer plate 42, at positions substantially in the middle thereof in the top-bottom direction, in the mounting bracket 40(2), the engaging members 48 are provided at both side edges of the inner plate 41, at positions substantially in the middle thereof in the top-bottom direction. Accordingly, herein, the same parts will be denoted by the same reference numerals, and descriptions thereof will be omitted.

In this embodiment, because the pair of engaging members 48 are provided on the inner plate 41, the distance between the engaging members 48 is larger than the width of the mounting tab 11 so that the pair of engaging members 48 can pass on both sides of the mounting tab 11 when the mounting tab 11 is attached to the mounting bracket 40(2) by folding the mounting bracket 40(2) in two.
Note that it is of course possible that, instead of the above configuration, the distance between the pair of engaging members 48 is made smaller than the width of the mounting tab 11, and the pair of engaging members 48 are made to pass through slits (not shown) provided in the mounting tab 11 and project toward the vehicle body side when the mounting tab 11 is attached to the mounting bracket 40(2).
The other steps of mounting the airbag 10 to the vehicle-body side wall 15 using the mounting bracket 40(2) according to the second embodiment and advantages thereof are, in effect, the same as those in the case where the mounting bracket 40(1) according to the first embodiment is used.

As shown in FIG. 7D, in a state in which the mounting bracket 40(2) according to the second embodiment is attached to the vehicle-body side wall 15, the bolt 50 is fastened to the nut 55 that is attached to the vehicle-exterior-side surface of the vehicle-body side wall with the outer plate 42 and the vehicle-body side wall 15 therebetween, in such a state that a back surface, on the vehicle exterior side, of a flange 52a of the bolt head 52 abuts against a bottom surface, on the vehicle interior side, of the bottom portion 45 of the annular member 44 of the inner plate 41. In this state, the mounting tab 11 is accommodated between the inner and outer plates 41 and 42 and does not affect the fastening.

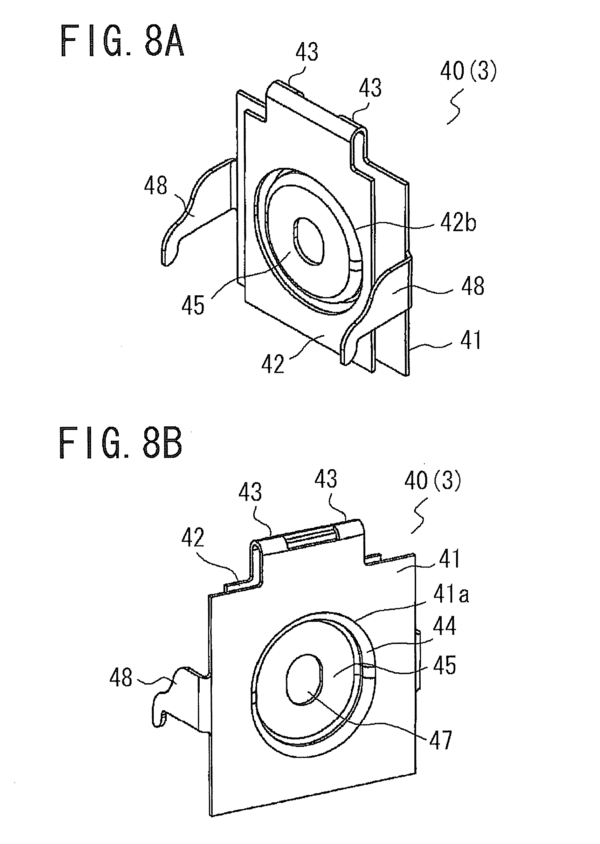

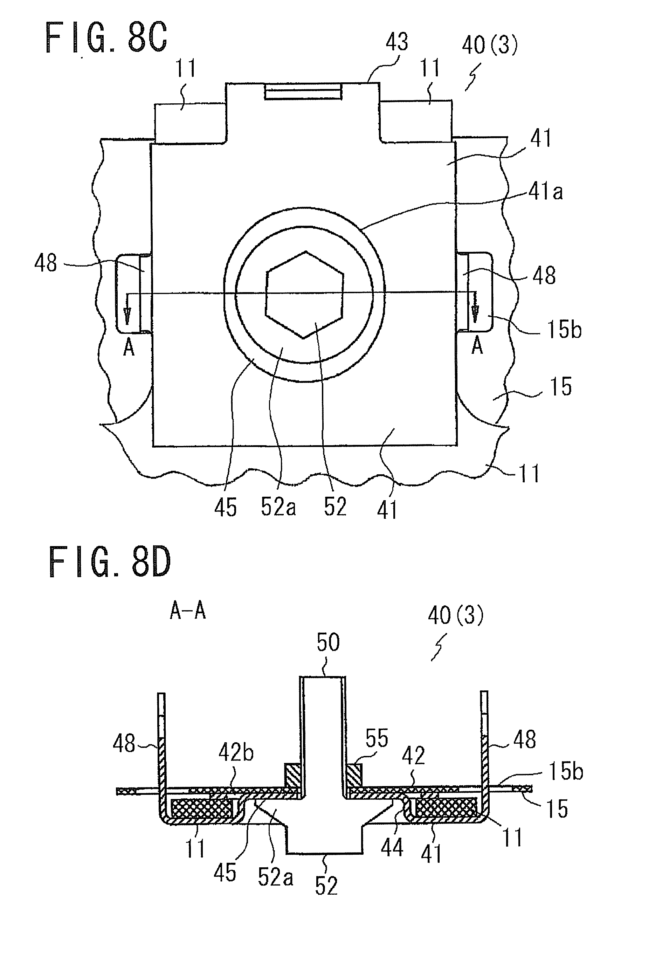

FIG. 8A is a perspective view of a mounting bracket 40(3) according to a third embodiment, as viewed from the vehicle exterior side, FIG. 8B is a perspective view of the same embodiment, as viewed from the vehicle interior side, FIG. 8C is a front view of the mounting bracket 40(3) attached to the vehicle-body side wall, and FIG. 8D is a cross-sectional view taken along line A-A in FIG. 8C.
The mounting bracket 40(3) according to the third embodiment is provided with an insertion hole 42b that has a larger diameter than the insertion hole 42a according to the second embodiment, to which the annular member 44 provided on the inner plate 41 can be fitted, and the thickness thereof is determined such that, when the mounting bracket 40(3) is folded in two at the connecting portion 43 such that the inner and outer plates 41 and 42 are substantially parallel to each other, the vehicle-exterior-side surface of the bottom portion 45 of the annular member 44 abuts against a vehicle-interior-side surface of the vehicle-body side wall. The mounting bracket 40(3) according to the third embodiment differs from the mounting bracket 40(2) according to the second embodiment only in the above-described configuration, and the other configurations are the same.
Accordingly, herein, the same parts will be denoted by the same reference numerals, and descriptions thereof will be omitted.

As shown in FIG. 8D, in a state in which the mounting bracket 40(3) according to the third embodiment is attached to the vehicle-body side wall 15, the back surface, on the vehicle exterior side, of the flange 52a of the bolt head 52 abuts against the bottom surface, on the vehicle interior side, of the bottom portion 45 of the annular member 44 of the inner plate 41. In this embodiment, as described above, because the annular member 44 of the inner plate 41 penetrates through the insertion hole 42b in the outer plate 42 unlike the second embodiment, the bolt 50 is fastened to the nut 55 that is attached to the vehicle-exterior-side surface of the vehicle-body side wall 15, in such a state that the inner plate 41 and the outer plate 42 are joined to the vehicle-body side wall 15. The mounting tab 11 is accommodated between the inner and outer plates 41 and 42 and does not affect the fastening thereof.

Furthermore, the other steps of mounting the airbag 10 to the vehicle-body side wall 15 using the mounting bracket 40(3) according to the third embodiment and advantages thereof are, in effect, the same as those in the case where the mounting bracket 40(2) according to the second embodiment, and hence, the mounting bracket 40(1) according to the first embodiment, is used, except that the vehicle-exterior-side surface of the bottom portion 45 of the annular member 44 directly abuts against the vehicle-body side wall 15 in the case where the mounting bracket 40(3) according to the third embodiment is used.
Note that, in the third embodiment, by making the vehicle-exterior-side surface of the bottom portion 45 of the annular member 44 protrude toward the vehicle exterior side beyond the outer plate 42, it becomes to be possible to make only the bottom portion 45 of the annular member 44 abut against the vehicle-body side wall. With this configuration, for example, it is possible to prevent a situation where an outer panel vibrates due to vibration caused by a driving vehicle, generating an abnormal noise with respect to the vehicle-body side wall.
Moreover, as in the first to third embodiments described above, in the configuration in which the annular member 44 is provided with the bottom portion 45, it is possible to dispose the bolt head 52 on the vehicle exterior side by an amount corresponding to the difference in level between vehicle-interior-side surfaces of the mounting brackets 40(1) to 40(3) and a vehicle-interior-side surface of the bottom portion 45 of the annular member 44. Thus, it is possible to reduce the overall thickness.

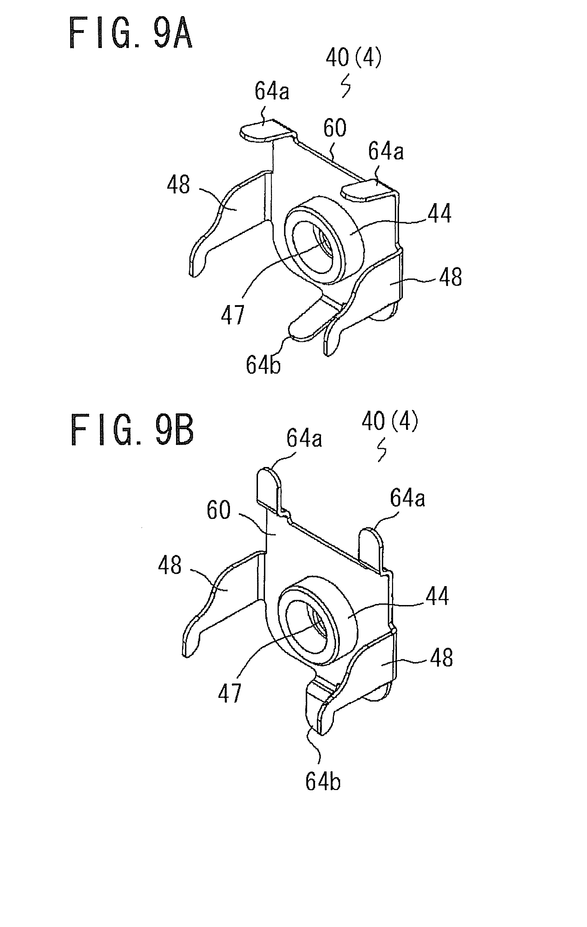

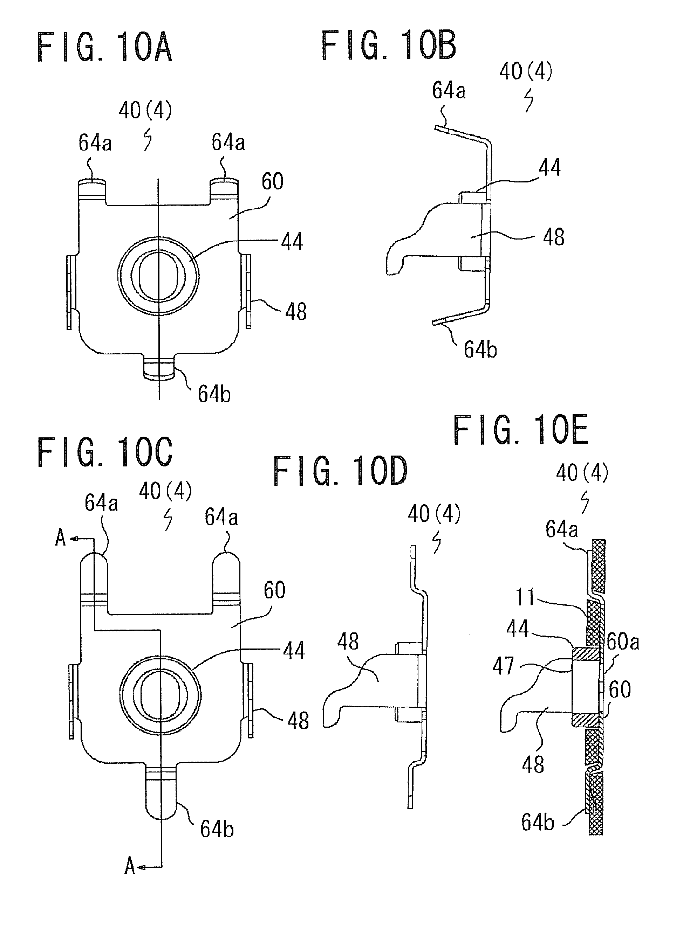

FIG. 9 includes perspective views of a mounting bracket 40(4) according to a fourth embodiment, as viewed from the vehicle exterior side, in which FIG. 9A shows a state before claw portions are bent back, and FIG. 9B shows a state after the claw portions are bent back.
Unlike the first to third embodiments, the mounting bracket 40(4) according to the fourth embodiment is made of a single, substantially rectangular metal plate 60 and is integrally provided with the annular member 44 substantially at the center of the back surface on the vehicle exterior side. The plate 60 is provided with a pair of engaging members 48 projecting toward the vehicle exterior side, with which the mounting bracket 40(4) is engaged with insertion holes (not shown) in the vehicle-body side wall 15, substantially in the middle position in the top-bottom direction thereof. Furthermore, at both ends of the upper edge thereof, claw portions 64a that serve as retaining members for retaining the mounting tab 11 of the airbag 10 fitted to the annular member 44 are provided so as to stand from the metal plate 60 of the mounting bracket 40(4) substantially perpendicularly toward the vehicle exterior side. Furthermore, a claw portion 64b that serves as a similar retaining member is provided substantially in the middle position of the lower edge of the plate 60 (FIG. 9A). These claw portions 64a and 64b are inserted into slits provided in the mounting tab 11 of the airbag 10 and then are bent back so as to be substantially parallel to the mounting tab (see FIGS. 9B and 10E).
Unlike the annular member 44 according to the first to third embodiments, the annular member 44 according to this embodiment have open ends and does not have a bottom, and the diameter of the inner hole 47 is made smaller than the diameter of the bolt head 52 (flange 52a). Thus, when the bolt is inserted into the annular member 44, the bolt head 52 abuts against a vehicle-interior-side end face of the plate 60.

FIG. 10A is a front view of the mounting bracket 40(4) according to the fourth embodiment, as viewed from the vehicle exterior side, FIG. 10B is a side view thereof, FIG. 10C is a front view, as viewed from the vehicle exterior side, showing a state in which the claw portions 64a and 64b of the retaining member are bent back so as to be substantially parallel to the metal plate 60, FIG. 10D is a side view thereof, and FIG. 10E is a side cross-sectional view thereof, taken along line A-A in FIG. 10C, showing a state in which the mounting tab 11 is attached.
The shape of the mounting bracket 40(4) shown in FIGS. 10A and 10B has already been described.
When the mounting tab 11 is attached to the vehicle-body side wall using this mounting bracket 40(4), first, the claw portions 64a and 64b and the engaging members 48 standing substantially perpendicularly to the metal plate 60 of the mounting bracket 40(4) are inserted into corresponding slits provided in the mounting tab 11. Then, the claw portions 64a and 64b are bent until they are substantially parallel to the plate 60, thereby retaining the mounting tab 11. Thus, the mounting bracket 40(4) and the mounting tab 11, and hence, the airbag 10, are integrated. FIG. 10E shows this state. Subsequently, the engaging members 48 of the mounting bracket 40(4) are engaged with the mounting holes in the vehicle-body side wall.

Finally, a bolt is inserted from an insertion hole 60a in the plate 60, passes through the inner hole 47 in the annular member 44 and the insertion hole in the vehicle-body side wall, and is screwed into a nut attached to the vehicle-exterior-side surface of the vehicle-body side wall, whereby fastening is achieved in such a manner that the head of the bolt is abutted against the plate 60. Thus, the airbag 10 is mounted to the vehicle-body side wall via the mounting tab 11.
According to this embodiment, the mounting tab 11 is retained after the claw portions 64a and 64b of the retaining member for preventing the mounting tab from coming off are inserted into the slits in the mounting tab 11. Thus, temporary attachment between the airbag 10 and the mounting bracket 40(4) is firm.

The fourth embodiment has the following advantages:
(1) The mounting bracket 40(4) is formed of the plate 60 alone and has a simpler structure than the structures of the mounting brackets 40(1) to 40(3) according to the first to third embodiments, in which the inner and outer plates 41 and 42 are connected at the connecting portion 43.
(2) When the mounting tab 11 that is temporarily attached to the mounting bracket 40(4) in advance is attached to the vehicle-body side wall, it is only necessary to align the inner hole 47 in the annular member 44 with the insertion hole in the vehicle-body side wall. Other positional adjustments are not necessary at all. Accordingly, the airbag can be easily mounted to the vehicle-body side wall.
(3) The fastening torque can be appropriately adjusted without being influenced by the mounting tab 11 of the airbag, and a decrease in the adjusted torque does not occur. Furthermore, because the size of the insertion hole can be made smaller than the insertion hole in the mounting tab of the conventional airbag disclosed in, for example, PTL 3, the sizes of the mounting tab and mounting bracket 40(4) can be reduced while ensuring the strength.
(4) Because the mounting bracket 40(4) is formed of a single plate 60, and the annular member 44 is provided thereon, it is possible to make only the annular member 44 abut against a vehicle-exterior-side panel, while making the claw portions 64a and 64b, the mounting tab 11, etc., not abut against the vehicle-body side wall (vehicle-exterior-side panel) 15. Accordingly, it is possible to prevent an abnormal noise from being generated by vibration of the mounting tab 11, etc. touching the vehicle-body side wall 15 during driving of the vehicle.

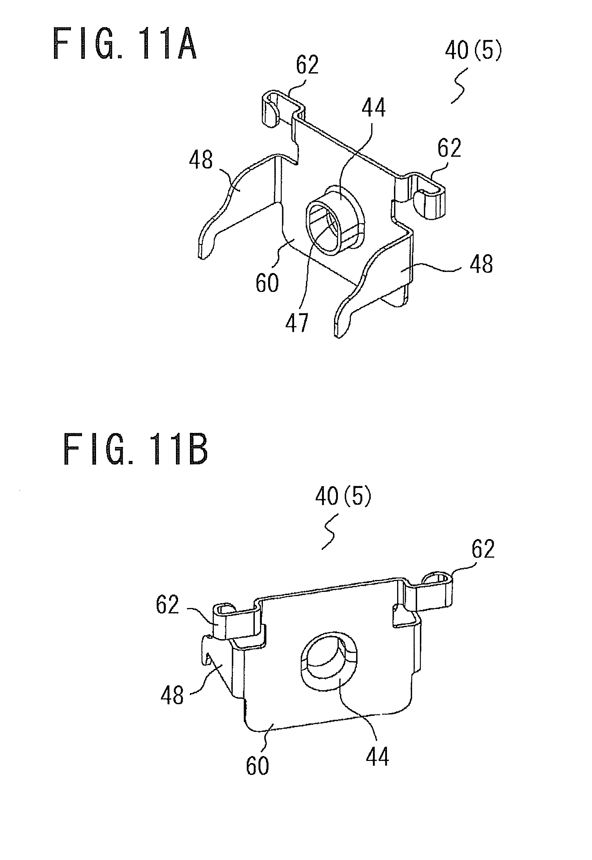

FIG. 11A is a perspective view of a mounting bracket 40(5) according to a fifth embodiment, as viewed from the vehicle exterior side, and FIG. 11B is a perspective view of the same embodiment, as viewed from the vehicle interior side.
The mounting bracket 40(5) according to the fifth embodiment is the same as that according to the fourth embodiment except that retaining members formed of claw portions 62, with which the mounting tab 11 of the airbag 10 fitted to the annular member 44 is engaged, are integrally provided at only both ends of the upper edge thereof. More specifically, this embodiment is formed of a single, substantially rectangular metal plate 60, the annular member 44 is integrally formed substantially at the center of the back surface, on the vehicle exterior side, thereof, and the pair of engaging members 48, with which the mounting bracket 40(5) is engaged with the insertion holes (not shown) in the vehicle-body side wall 15, are provided substantially in the middle position of the plate 60 in the top-bottom direction, so as to protrude toward the vehicle exterior side.

When the airbag 10 is mounted to the vehicle-body side wall 15 using the mounting bracket 40(5) according to the fifth embodiment, first, the insertion hole in the mounting tab 11 is fitted to the annular member 44, the engaging members 48 are inserted into the mounting holes in the mounting tab, and the claw portions 62 are inserted into slits (not shown) in the mounting tab 11. Then, the claw portions 62 are bent back onto the mounting tab 11 by 90 degrees. FIGS. 11A and 11B both show the claw portions 62 bent in this way. Thus, the mounting tab 11 and the mounting bracket 40(5) are integrated.
In this state, the engaging members 48 are engaged with the mounting holes 15b in the vehicle-body side wall 15, and a bolt inserted into the inner hole 47 in the annular member 44 is screwed into and fastened to a nut attached to the vehicle exterior side of the vehicle-body side wall.

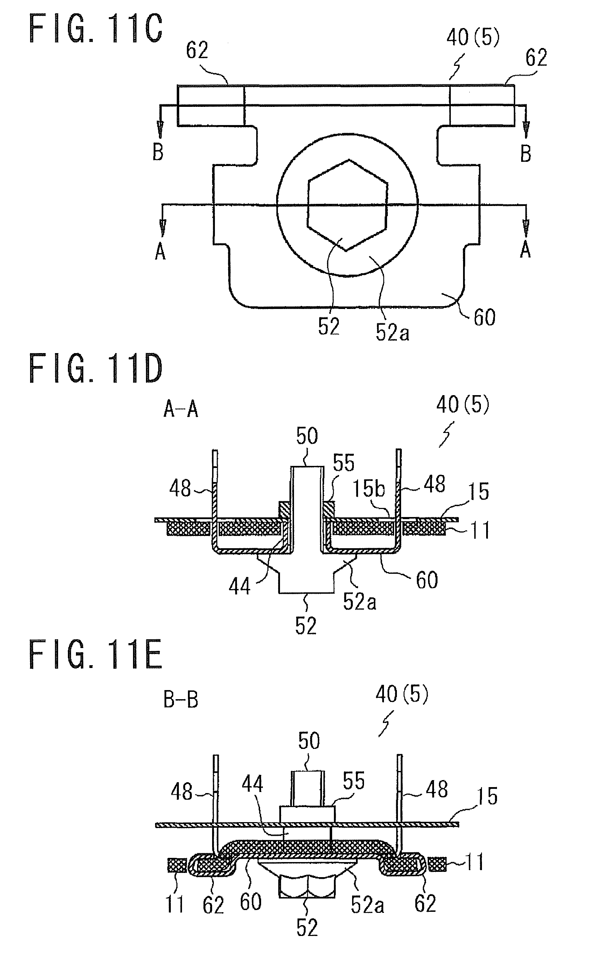

FIG. 11C is a front view of the mounting bracket 40(5) according to this embodiment, attached to the vehicle-body side wall 15, FIG. 11D is a cross-sectional view taken along line A-A in FIG. 11C, and FIG. 11E is a cross-sectional view taken along line B-B in FIG. 11C.
In this embodiment, the flange 52a of the bolt head 52 abuts against a vehicle-interior-side surface of the plate 60, and a vehicle-exterior-side end face of the annular member 44 provided on the plate 60 abuts against the vehicle-body side wall 15. The mounting tab 11 is retained by the claw portions 62, which are inserted therethrough and bent back (see FIG. 11E), and is accommodated between the plate 60 and the vehicle-body side wall 15 in a state in which it is freely fitted to the annular member 44 at portions where the claw portions 62 do not exist (FIG. 11D).

According to this embodiment, temporary attachment of the mounting tab 11 of the airbag and the mounting bracket 40(5) is easy because it does not need to be inserted into the slit in the mounting tab 11, unlike the claw portion 64b of the mounting bracket 40(4) of the fourth embodiment.
The other advantages are the same as those of the fourth embodiment.

In the fourth and fifth embodiments, the claw portions 64a, 64b, and 62, which serve as the retaining members, may be crimped after bending. Furthermore, although the annular member 44 may be formed by performing raising process on the inner plate 41 in the mounting brackets 40(1) to 40(5) according to the respective embodiments, the annular member 44 may be formed as an annular member that is formed separately from the inner plate 41. In this case, the separately formed annular member is joined to the inner plate by, for example, welding, so as to protrude toward the vehicle exterior side.
Moreover, it is not necessary that the annular member 44 is thicker than the mounting tab 11; the annular member 44 only has to have such a thickness that a feeling of contact can be obtained when the bolt is fastened. That is, the thickness of the mounting tab 11 may be larger than the thickness of the annular member 44 as long as the cushioning effect of the mounting tab 11 that is compressed by fastening the bolt does not affect the fastening torque.

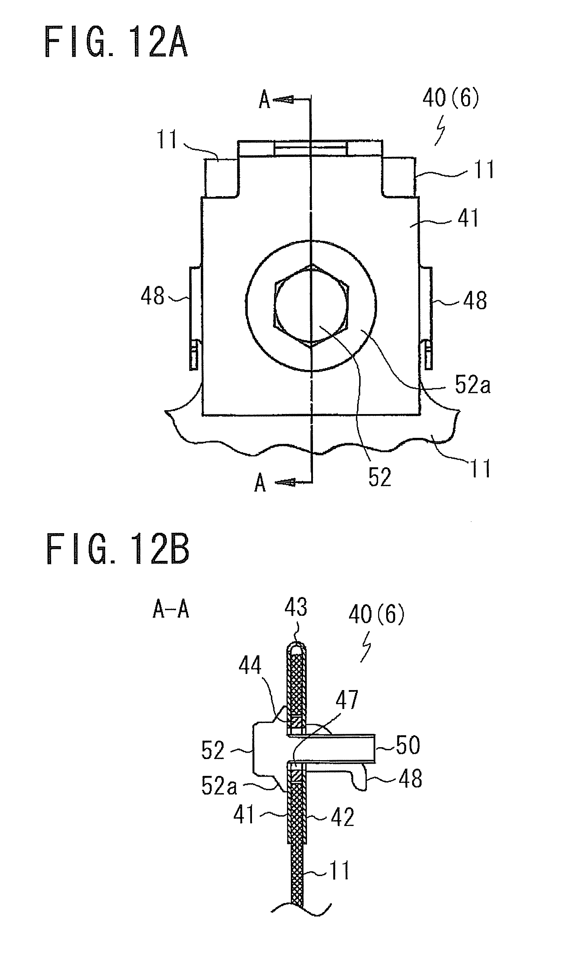

FIG. 12 shows a sixth embodiment, in which FIG. 12A is a front view of a mounting bracket 40(6) attached to the vehicle-body side wall, and FIG. 12B is a cross-sectional view taken along line A-A in FIG. 12A.
The mounting bracket 40(6) according to this embodiment is provided with the annular member 44 on the inner plate 41. This annular member 44 does not have the bottom and, thus, has open ends, similarly to the fourth and fifth embodiments. The diameter of the inner hole 47 therein is smaller than the diameter of the flange 52a of the bolt head 52. Thus, when the bolt 50 is inserted through the annular member 44, the bolt head 52 abuts against the vehicle-interior-side surface of the inner plate 41. The other configurations and advantages are the same as those of the second embodiment.

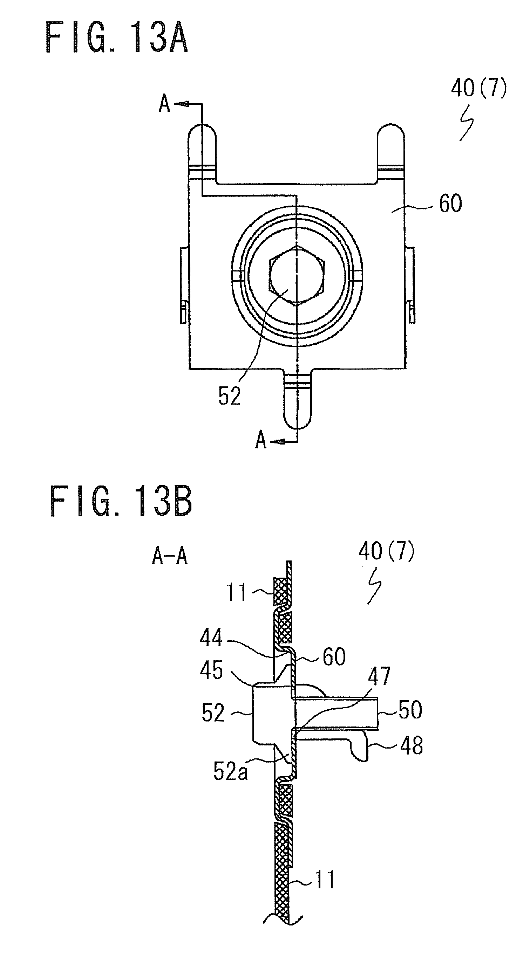

FIG. 13 shows a seventh embodiment, in which FIG. 13A is a front view of a mounting bracket 40(7) attached to the vehicle-body side wall, and FIG. 13B is a cross-sectional view taken along line A-A in FIG. 13A.
In the mounting bracket 40(7) according to this embodiment, similarly to, for example, the fourth embodiment, the annular member 44 is provided on the single plate 60. However, unlike the fourth embodiment, the annular member 44 is provided with the bottom portion 45, and the diameter of the annular member 44 is larger than the diameter of the flange 52a of the bolt head 52 that is inserted therethrough. The inner hole 47 therein is formed in the shape of an elongated hole through which the bolt 50 passes, similarly to, for example, the first embodiment.
The other configurations are the same as those of, for example, the fourth embodiment described above.
In this embodiment, because the bolt head 52 can enter the annular member 44, the overall thickness can be reduced by the corresponding amount, compared with, for example, the fourth embodiment.

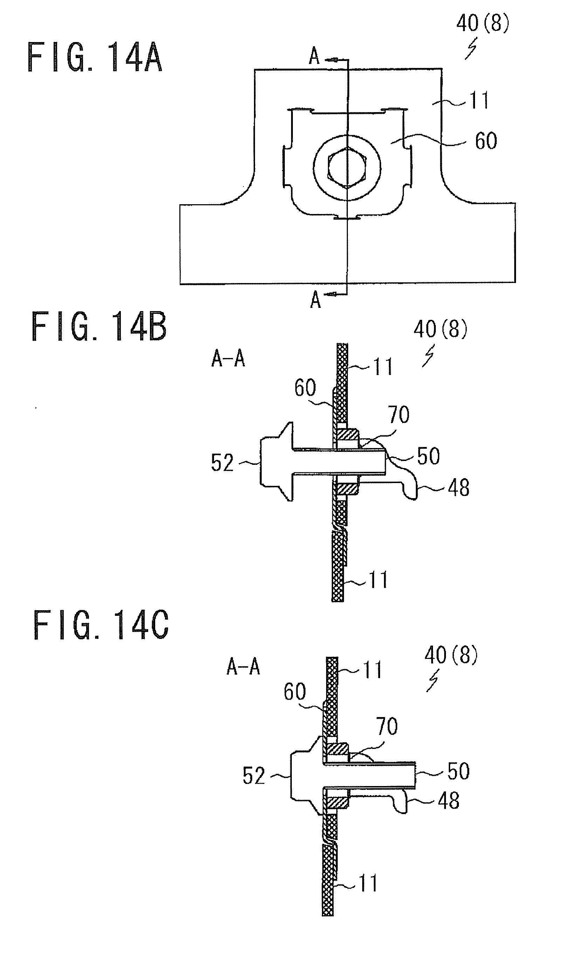

FIG. 14 shows a mounting bracket 40(8) according to an eighth embodiment, in which FIG. 14A is a front view thereof, FIG. 14B is a cross-sectional view thereof taken along line A-A in FIG. 14A, showing a state in which the bolt 50 is temporarily attached to the mounting bracket 40(8), and FIG. 14C shows a state in which the bolt 50 is fastened to a nut (not shown) attached to the vehicle-exterior-side surface of the vehicle-body side wall.
The mounting bracket 40(8) according to this embodiment has the same structure as the fourth embodiment, except that, in mounting, the bolt 50 is temporarily attached to the mounting bracket 40(8) in advance. In this case, a toothed washer 70 (made of stainless steel and having a thickness of 0.25 mm, for example) is fitted to the bolt 50 to temporarily attach the bolt 50. At this time, the end, on the vehicle exterior side, of the bolt 50 needs to be disposed on the vehicle interior side with respect to hook-shaped engaging portions of the engaging members 48.
This is to prevent a situation where the projecting bolt 50 abuts against the vehicle-body side wall, making it impossible to engage the engaging members 48 with the vehicle-body side wall when the mounting bracket 40(8), to which the bolt 50 is temporarily attached, is attached to the vehicle-body side wall. The toothed washer 70 is fitted to the bolt 50 projecting from the vehicle exterior side of the annular member 44 by lightly hammering it. The other structures are the same as those of the fourth embodiment.

When the mounting bracket 40(8) of this embodiment is fitted to the vehicle-body side wall, as has already been described above, the engaging members 48 are engaged with the mounting holes provided in the vehicle-body side wall, after which the bolt 50 is inserted through the insertion hole in the vehicle-body side wall and is screwed into and fastened to the nut that is fixed to the vehicle-body side wall on the vehicle exterior side. Thus, the mounting bracket 40(8) can be attached to the vehicle-body side wall.
According to this embodiment, it is possible to mount the mounting bracket 40(8), to which the bolt 50 is temporarily attached in advance, to the vehicle-body side wall. Therefore, no additional work to insert the bolt 50 is required when the mounting bracket 40(8) is attached to the vehicle-body side wall, and thus, fitting of the bolt 50 is easy. Accordingly, mounting of the mounting bracket 40(8) can be easily performed.
Note that, in the case where both the inner hole and insertion hole are formed in the shape of an elongated hole in the above-described respective embodiments, instead of such a configuration, one of them may be formed in the shape of an elongated hole. Reference Signs List

- 1:: airbag device,
- 10:: airbag,
- 11:: mounting tab,
- 11a:: insertion hole,
- 14:: gas inlet portion,
- 15:: vehicle-body side wall,
- 15a:: insertion hole,
- 20:: front base fabric,
- 21:: back base fabric,
- 25:: inflator,
- 26:: bracket,
- 30:: inflating portion,
- 33:: connecting portion,
- 40(1) to 40(8):: mounting bracket,
- 41:: inner plate,
- 42:: outer plate,
- 41a, 42a, 42b:: insertion hole,
- 43:: connecting portion,
- 44:: annular member,
- 45:: bottom,
- 47:: inner hole,
- 50:: bolt,
- 52:: bolt head,
- 55:: nut,
- 60:: plate,
- 62, 64a, 64b:: claw portions, and
- 70:: toothed washer.

## Claims

1. An airbag device to be disposed at an upper part inside a vehicle, along a front-rear direction of the vehicle, the airbag device comprising:
a plurality of mounting tabs that are provided on an airbag of the airbag device, each mounting tab having an insertion hole;
a mounting bracket including inner and outer plates that are connected by a flexible connecting portion, each inner and outer plate having an insertion hole;
an annular member that has a predetermined thickness and is to be disposed inside the insertion hole in the mounting tab; and
a fastening means having a shaft portion penetrating through the inner hole in the annular member and the insertion hole in the inner and outer plates, the fastening means serving to attach the mounting bracket to a vehicle-body side wall,
wherein the annular member restricts the distance between the inner and outer plates to the predetermined thickness when the airbag is mounted to the vehicle-body side wall.

2. An airbag device to be disposed at an upper part inside a vehicle, along a front-rear direction of the vehicle, the airbag device comprising:
a plurality of mounting tabs that are provided on an airbag of the airbag device, each mounting tab having an insertion hole;
a mounting bracket including inner and outer plates that are connected by a flexible connecting portion, each inner and outer plate having an insertion hole;
an annular member that has a predetermined thickness and is to be disposed inside the insertion hole in the mounting tab and the insertion hole in the outer plate; and
a fastening means having a shaft portion penetrating through the inner hole in the annular member and the insertion hole in the inner and outer plates, the fastening means serving to attach the mounting bracket to a vehicle-body side wall,
wherein the annular member restricts the distance between the inner plate and the vehicle-body side wall to the predetermined thickness when the airbag is mounted to the vehicle-body side wall.

3. An airbag device to be disposed at an upper part inside a vehicle, along a front-rear direction of the vehicle, the airbag device comprising:
a plurality of mounting tabs that are provided on an airbag of the airbag device, each mounting tab having an insertion hole;
a mounting bracket including a single plate having an insertion hole, the mounting bracket being disposed on a vehicle interior side of the mounting tab;
an annular member that has a predetermined thickness and is to be disposed inside the insertion hole in the mounting tab; and
a fastening means having a shaft portion penetrating through the inner hole in the annular member and the insertion hole in the mounting bracket, the fastening means serving to attach the mounting bracket to a vehicle-body side wall,
wherein the annular member restricts the distance between the mounting bracket and the vehicle-body side wall to the predetermined thickness when the airbag is mounted to the vehicle-body side wall.

4. The airbag device according to any one of Claims 1 to 3,
wherein both or either of the inner hole and the insertion hole, through which the shaft portion of the fastening means passes, are formed in the shape of an elongated hole.

5. The airbag device according to any one of Claims 1 to 4,
wherein the annular member is formed integrally with the mounting bracket.

6. The airbag device according to any one of Claims 1 to 4,
wherein the annular member is formed separately from the mounting bracket.

7. The airbag device according to any one of Claims 1 to 6,
wherein the mounting bracket includes integrally formed a retaining member that retains the mounting tab.

8. The airbag device according to any one of Claims 1 to 7,
wherein the mounting bracket includes integrally formed engaging members to be engaged with mounting holes provided in the vehicle-body side wall.

9. The airbag device according to any one of Claims 1 to 8,
wherein the annular member is a circular member.

10. The airbag device according to any one of Claims 1 to 9,
wherein the fastening means is a bolt and a nut, the bolt being provided with a toothed washer for temporary attachment, the toothed washer temporarily attaching the bolt to the mounting bracket to which the mounting tab is fitted.
